Europäisches Patentamt

European Patent Office

Office européen des brevets

(19)

(11) Veröffentlichungsnummer : **0 102 627**
**B1**

(12)

# EUROPÄISCHE PATENTSCHRIFT

(45) Veröffentlichungstag der Patentschrift :
28.05.86

(21) Anmeldenummer : 83108672.3

(22) Anmeldetag : 02.09.83

(51) Int. Cl.⁴ : **G 03 B 23/04**

(54) **Behälter zur Aufnahme von gerahmten Dias.**

(30) Priorität : 03.09.82 DEU 8224928

(43) Veröffentlichungstag der Anmeldung :
14.03.84 Patentblatt 84/11

(45) Bekanntmachung des Hinweises auf die Patenterteilung : 28.05.86 Patentblatt 86/22

(84) Benannte Vertragsstaaten :
AT DE FR GB IT

(56) Entgegenhaltungen :
DE-A- 2 248 302
DE-A- 3 046 650
DE-C- 1 109 403
DE-U- 1 963 159
GB-A-   975 107

(73) Patentinhaber : Patent-Treuhand-Gesellschaft für
elektrische Glühlampen mbH
Hellabrunner Strasse 1
D-8000 München 90 (DE)

(72) Erfinder : Geissler, Udo M., Prof.
Henrik-Ibsen-Strasse 5
D-8000 München 19 (DE)

**Beschreibung**

Die Erfindung betrifft einen Behälter zum Einbringen in einen Diabetrachter und zum Aufbewahren von gerahmten Dias, wobei der Behälter aus einem Unterteil und einem Deckel besteht. Das Unterteil ist aus einem Schacht gebildet, der an seinem unteren, vom Deckel abgewandten Ende einen festen Boden hat und eine erste Schachtseite unmittelbar oberhalb des Bodens eine erste, zum Hindurchschieben eines Dias geeignete Ausnehmung aufweist.

Aus der GB-A-975 107 ist ein Behälter zur Aufnahme von rechteckigen, flachen Artikeln wie zahnärztliche Röntgenfilme, bekannt. Dieser Behälter besteht aus einem Schacht, der unmittelbar oberhalb des Bodens in zwei einander gegenüberliegenden Schachtseiten Öffnungen aufweist. Durch die eine Öffnung ragt ein Schieber, der jeweils einen dieser flachen Artikel durch die zweite Öffnung herausschiebt. Dieser Behälter ist nach oben von einem Deckel verschlossen.

Die DE-C-1 109 403 beschreibt ebenfalls einen mit einem Deckel verschlossenen Behälter, jedoch zur Aufnahme von Diapositiven, der für eine Bildwechselvorrichtung vorgesehen ist. Der volle Behälter wird verschlossen in die Vorrichtung eingesetzt, wobei gleichzeitig mittels Haken der Deckel beiseite geschoben und eine Seite des Behälters freigegeben wird. Durch diese Öffnung gelangen die Dias in die Bildwechselvorrichtung.

Die betrachteten Bilder werden anschließend durch einen am oberen Ende des Behälters vorgesehenen Einlaßschlitz eines auf der anderen Seite des Bildfensters angeordneten zweiten Behälters geschoben. Mit diesem zweiten Behälter werden die Dias der Bildwechselvorrichtung entnommen und aufbewahrt.

Der Behälter weist jedoch unverschließbare Öffnungen auf, wie eben diesen Einlaßschlitz und auch eine Öffnung zum Durchführen eines Druckelementes. Durch den Einlaßschlitz können möglicherweise die Dias aus dem Behälter herausfallen oder es kann Staub und Schmutz durch beide Öffnungen hineingelangen.

Der Erfindung liegt die Aufgabe zugrunde, einen Behälter für einen Diabetrachter zu schaffen, der einerseits zum Einbringen der Dias in den Betrachter, andererseits zum Entnehmen der Dias aus dem Betrachter geeignet und zudem auch zur platzsparenden und insbesondere geschützten Aufbewahrung für die Dias vorgesehen ist.

Diese Aufgabe wird durch die im kennzeichnenden Teil des Anspruches 1 genannten Merkmale gelöst. Das aus einem Schacht bestehende Unterteil des Behälters weist an der einen Schachtseite unmittelbar oberhalb des Bodens eine sich über die ganze Breite des Unterteils erstreckende Ausnehmung auf. Durch diese Ausnehmung werden die Dias mit einem Schieber, der durch eine oder mehrere Ausnehmungen auf der gegenüberliegenden Schachtseite hindurchgreift, aus dem Behälter heraus in das Bildfenster des Diabetrachters hineingeschoben. Je nach Ausgestaltung des Schiebers kann/können die Ausnehmung/en auf der gegenüberliegenden Schachtseite in den Boden des Unterteils übergehen, wobei sie sich entweder nur teilweise oder auch ganz über den Boden erstreckt/erstrecken.

Mittels des Schiebers wird dann das sich im Bildfenster des Betrachters befindende Dia weitergeschoben und fällt in einen Behälter, der in die Ausnehmung des Diabetrachters eingesetzt ist, die seitlich versetzt unterhalb des Bildfensters angeordnet ist. Zur Vermeidung des Verkantens der hineinfallenden Dias ragt in das Unterteil wenigstens ein Vorsprung.

Um die Aufgabe der platzsparenden Diaarchivierung zu lösen, ist für das schachtförmige Unterteil des Behälters ein Deckel vorgesehen. Dieser Deckel besteht aus wenigstens zwei Seitenwänden und ist in vertikaler Richtung auf das Unterteil aufsteckbar. Die Seitenwände des Deckels sind so ausgebildet, daß wenigstens eine Seitenwand die Ausnehmung, die sich über die ganze Breite des Unterteils erstreckt, im geschlossenen Zustand des Behälters ganz oder teilweise abdeckt. Die Dias sind so vor Herausfallen gesichert.

In zwei Raststellungen kann der Deckel auf dem Unterteil aufgesetzt sein. In der unteren Raststellung ist der Behälter geschlossen und somit archivierfähig und in der oberen Raststellung ist er betriebsbereit, d. h., die Ausnehmung, die sich über die ganze Breite des Unterteils erstreckt, ist offen. Auch bildet sich in der oberen Raststellung unterhalb des Deckeldaches eine Öffnung, durch die, beim Behälter in Auffangfunktion, die bereits betrachteten Dias hineinfallen.

Nur bei erstmaligem Beladen des Behälters mit einem Stapel von Dias wird der Deckel vollständig abgenommen. In der weiteren Anwendung bewegt man ihn nur zwischen den Raststellungen auf und ab.

Ein Ausführungsbeispiel der Erfindung ist in Zeichnungen dargestellt und wird im folgenden näher beschrieben. Es zeigen :

Figur 1   eine Ansicht auf die Rückseite des Diabetrachters, für den der Behälter vorgesehen ist ;

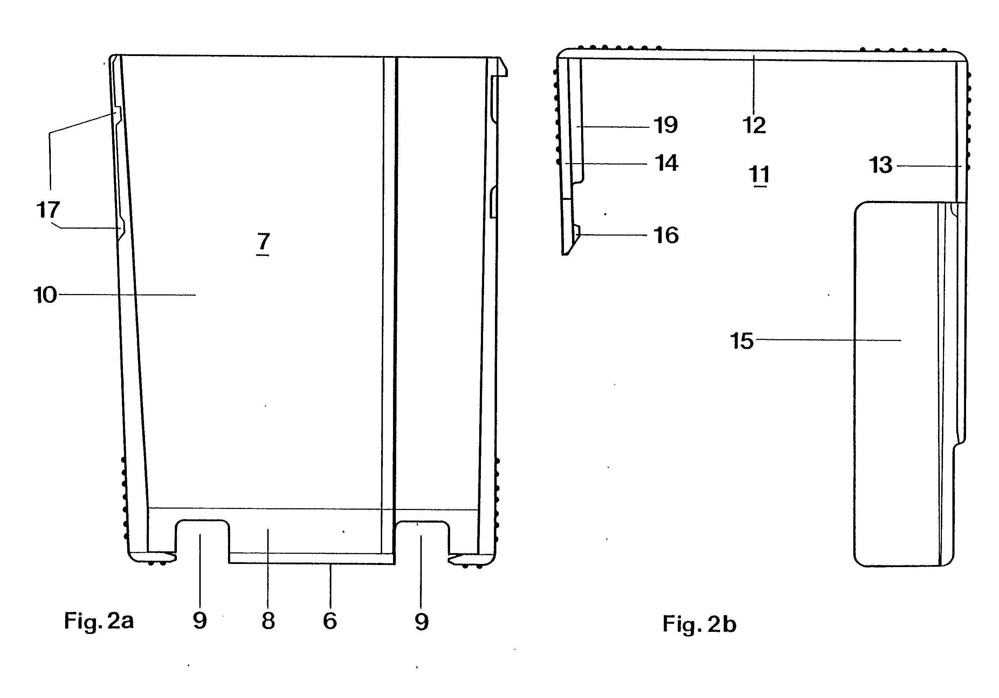

Figur 2a   eine Seitenansicht des Unterteils ;

Figur 2b   eine Seitenansicht des Deckels ;

Figur 3   eine Seitenansicht des Behälters im Betriebszustand ;

Figur 4   eine Ansicht von unten auf das Unterteil des Behälters.

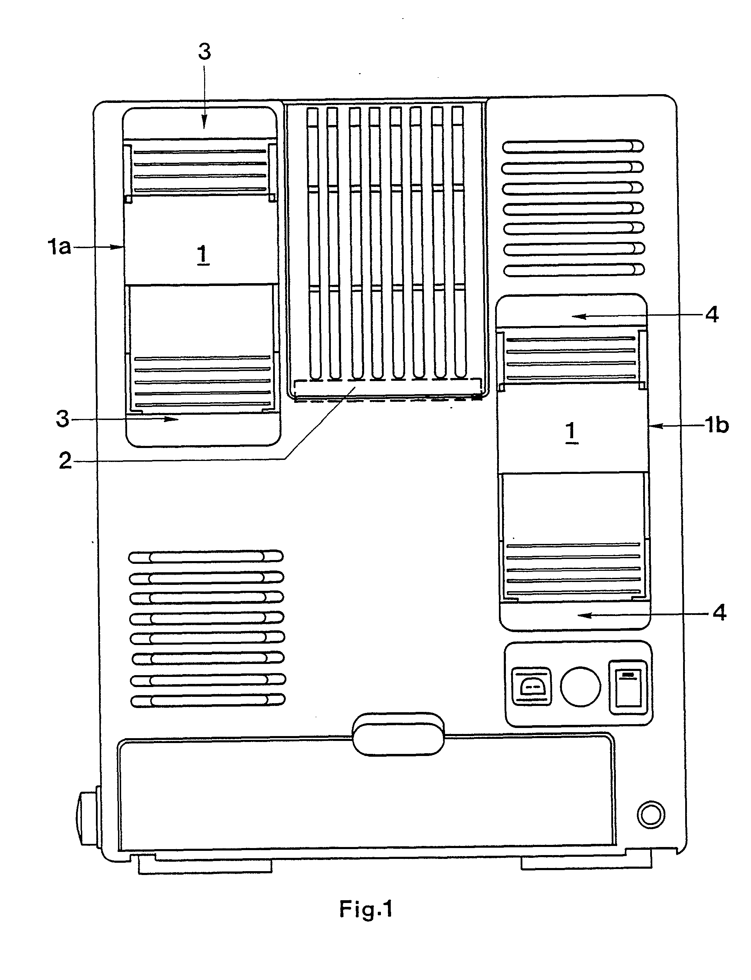

In Figur 1 ist die Rückseite des Diabetrachters dargestellt, für den der Behälter 1 zur Aufnahme von gerahmten Dias vorgesehen ist. Beidseitig des Bildfensters 2 des Diabetrachters sind Schächte 3, 4 vorgesehen, in die je ein Behälter 1a, 1b einsetzbar ist. Dabei sind die Schächte 3, 4 so angeordnet, daß der eine Behälter 1a mit seinem unteren Ende und der andere Behälter 1b mit dem oberen Ende des Unterteils 7 in Höhe des Bildfensters 2 liegt. Der mit den Dias gefüllte Behälter 1a ist im oberen Schacht 3 eingesetzt und ein leerer Behälter 1b im unteren Schacht 4. Die Dias werden nun nacheinander mittels eines Schiebers von dem oberen Behälter 1a aus mit Zwischenstation im Bildfenster 2 in den unteren Behälter 1b befördert.

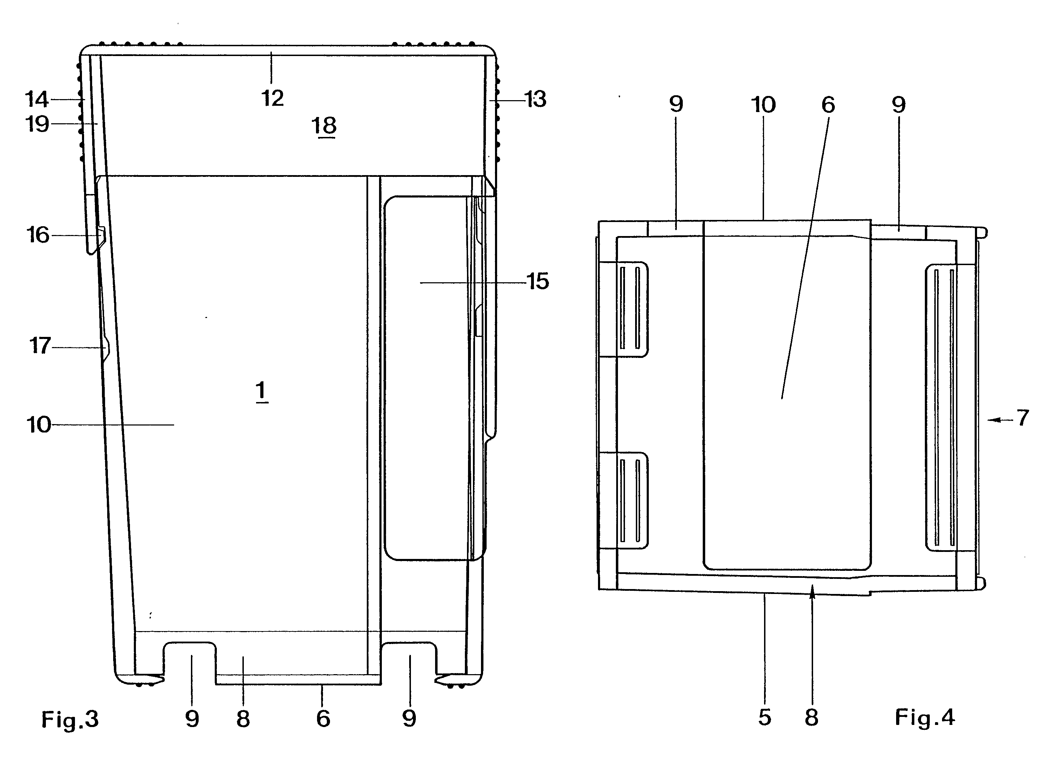

Um die Dias aus dem Behälter 1 herauszubringen, weist dieser am unteren Ende einer Seite 5 (Fig. 4) unmittelbar oberhalb des Bodens 6 eine sich über die ganze Breite des Unterteils 7 erstreckende Ausnehmung 8 auf. Auf der dieser Ausnehmung 8 gegenüberliegenden Seite 10 sind zwei kleine Ausnehmungen 9 vorgesehen, die sich im Boden 6 des Unterteils 7 durchgehend bis zur breiten Ausnehmung 8 fortsetzen. Zwei vom Schieber (nicht dargestellt) abstehende Messerchen greifen in die zwei kleinen Ausnehmungen 9 ein, erfassen dabei das jeweils unterste Dia und schieben es durch die Ausnehmung 8 ins Bildfenster 2 des Diabetrachters. Der Antrieb des Schiebers kann sowohl manuell als auch über einen Motor erfolgen.

Zur Aufbewahrung der Dias wird das Behälterunterteil 7 mit einem Deckel 11 verschlossen. Dieser Deckel 11 besteht aus einem flachen Dach 12 und im wesentlichen aus zwei Seitenwänden 13, 14, die bei aufgesetztem Deckel 11 an die Seitenwände des Unterteils 7 zu liegen kommen, die keine Ausnehmungen 8, 9 aufweisen. An einer Seitenwand 13 sind beidseitig Laschen 15 angeformt, die zur besseren Führung des Deckels 11 auf dem Unterteil 7 dienen und die bei fest auf das Unterteil 7 aufgeschobenem Deckel 11 eine der kleinen Ausnehmungen 9 und teilweise die breite Ausnehmung 8 überlappen. Dadurch sind die Dias vor Herausfallen gesichert.

An der anderen Seitenwand 14 sind Rastnasen 16 vorgesehen, die in zwei Stellungen in Vertiefungen 17 an einer der Aussenwände des Unterteils 7 eingreifen. In der unteren Raststellung ist der Behälter 1 zur Aufbewahrung der Dias geschlossen. In der oberen Raststellung entsteht zwischen dem oberen Ende des Unterteils 7 und dem Deckeldach 12 eine Öffnung 18, durch die die bereits betrachteten Dias in den Behälters 1b hineinfallen. Um ein Verkanten der fallenden Dias zu vermeiden, ist am Deckel 11 ein Vorsprung 19 vorgesehen, der durch einen Schlitz in einer Seitenwand ins Innere des Unterteils 7 hineinragt.

Nur zum erstmaligen Füllen des Behälters 1 mit einem Stapel von Dias muß der Deckel 11 abgenommen werden. In allen weiteren Anwendungsfällen wird er nur zwischen der oberen und unteren Raststellung hin- und herbewegt.

Vorteilhafterweise ist der Behälter 1 aus einem durchsichtigen Material, so daß beispielsweise durch ein beschriftetes Dia, das dem Stapel obenaufliegt, der Behälter 1 gekennzeichnet werden kann.

## Patentansprüche

1. Behälter (1) zum Einbringen in einen Diabetrachter und zum Aufbewahren von gerahmten Dias, bestehend aus einem Unterteil (7) und einem Deckel (11), bei dem das Unterteil (7) aus einem Schacht gebildet ist, wobei der Schacht an seinem unteren, vom Deckel abgewandten Ende einen festen Boden (6) hat und eine erste Schachtseite (5) unmittelbar oberhalb des Bodens (6) eine erste, zum Hindurchschieben eines Dias geeignete Ausnehmung (8) aufweist, dadurch gekennzeichnet, daß die der ersten Schachtseite gegenüberliegende zweite Schachtseite (10) unmittelbar oberhalb des Bodens wenigstens eine weitere Ausnehmung (9) aufweist, daß der Deckel (11) aus einem das obere Ende des Schachtes abdeckenden flachen Dach (12) und wenigstens zwei Seitenwänden (13, 14) besteht und in vertikaler zur Längsrichtung des Schachtes paralleler Richtung auf das Unterteil (7) des Behälters (1) aufsteckbar ist, und daß der Deckel (11) an wenigstens einer Seite unmittelbar unterhalb des Daches (12) über die ganze Breite der Seite des Deckels (11) offen ist.

2. Behälter nach Anspruch 1, dadurch gekennzeichnet, daß sich die erste Ausnehmung (8) an der einen Schachtseite (5) über die ganze Breite des Unterteils (7) erstreckt.

3. Behälter nach Anspruch 1 und 2, dadurch gekennzeichnet, daß die weitere(n) Ausnehmung(en) (9) in den Boden (6) des Unterteils (7) übergeht (-gehen).

4. Behälter nach einem der Ansprüche 1 bis 3, dadurch gekennzeichnet, daß in das Unterteil (7) wenigstens ein Vorsprung (19) hineinragt, der ein Verkanten von in den Behälter (1) einzubringenden Dias verhindert.

5. Behälter nach einem der Ansprüche 2 bis 4, dadurch gekennzeichnet, daß eine Seitenwand (14) des Deckels (11) bei geschlossenem Behälter (1) ganz oder teilweise die erste Ausnehmung (8) abdeckt.

6. Behälter nach einem der Ansprüche 1 bis 5, dadurch gekennzeichnet, daß für den Deckel (11) am Unterteil (7) zwei Raststellungen (17) vorgesehen sind.

## Claims

1. A container (1) for insertion into a slide viewer and for storing framed slides comprising a lower part (7) and a lid (11), the lower part (7) being formed by a shaft whose lower end facing away from the lid is provided with a rigid bottom (6) and whose first shaft side (5) comprises a first recess (8) immediately above the bottom (6) suitable for slipping a slide therethrough, characterized in that the second shaft side (10) disposed opposite the first shaft side comprises at least one further recess (9) immediately above the bottom ; the lid (11) consists of a flat roof (12) covering the upper end of the shaft and of at least two side walls (13, 14) and may be placed over the lower part (7) of the container (1) in vertical direction parallel to the longitudinal direction of the shaft ; and the lid (11) is open at least at one side immediately below the roof (12) over the entire width of the side of the lid (11).

2. A container as claimed in claim 1, characterized in that the first recess (8) at the one shaft side (5) extends over the entire width of the lower part (7).

3. A container as claimed in claims 1 and 2, characterized in that the further recess(es) (9) continue(s) in the bottom (6) of the lower part (7).

4. A container as claimed in one of the claims 1 to 3, characterized in that at least one projection (19) extends into the lower part (7) which prevents the slides to be inserted into the container (1) from becoming wedged.

5. A container as claimed in one of the claims 2 to 4, characterized in that a side wall (14) of the lid (11) covers the first recess (8) entirely or partly when the container (1) is closed.

6. A container as claimed in one of the claims 1 to 5, characterized in that two stop locations (17) are provided for the lid (11) at the lower part (7).

**Revendications**

1. Magasin (1) destiné à être introduit dans un projecteur de diapositives et à stocker des diapositives encadrées, comprenant une partie inférieure (7) et un couvercle (11), la partie inférieure (7) étant formée par une case profonde, cette case profonde comportant un fond fixe (6) à son extrémité inférieure tournée à l'opposé du couvercle, et une première face (5) de ladite case profonde présentant, immédiatement au-dessus du fond (6), un premier évidement (8) approprié pour le coulissement traversant d'une diapositive, caractérisé par le fait que la seconde face (10) de la case profonde, opposée à la première face de cette case, comporte au moins un autre évidement (9) immédiatement au-dessus du fond ; par le fait que le couvercle (11) se compose d'un dessus aplati (12) obturant l'extrémité supérieure de la case profonde, ainsi que d'au moins deux parois latérales (13, 14), et peut être emboîté sur la partie inférieure (7) du magasin (1), dans le sens vertical parallèlement à la direction longitudinale de la case profonde ; et par le fait que le couvercle (11) est ouvert au moins d'un côté, directement au-dessous du dessus (12), sur toute la largeur de la face de ce couvercle (11).

2. Magasin selon la revendication 1, caractérisé par le fait que le premier évidement (8) pratiqué dans l'une (5) des faces de la case profonde s'étend sur toute la largeur de la partie inférieure (7).

3. Magasin selon les revendications 1 et 2, caractérisé par le fait que l'(les) autre(s) évidement(s) (9) se prolonge(nt) dans le fond (6) de la partie inférieure (7).

4. Magasin selon l'une des revendications 1 à 3, caractérisé par le fait qu'au moins un appendice (19), faisant saillie dans la partie inférieure (7), empêche un coincement de diapositives devant être introduites dans le magasin (1).

5. Magasin selon l'une des revendications 2 à 4, caractérisé par le fait que, lorsque ce magasin (1) est fermé, une paroi latérale (14) du couvercle (11) obture totalement ou en partie le premier évidement (8).

6. Magasin selon l'une des revendications 1 à 5, caractérisé par le fait que deux positions encliquetées (17) sont prévues pour le couvercle (11) sur la partie inférieure (7).

Fig.1

Fig. 2a

Fig. 2b

0 102 627

Fig.3

Fig.4

0 102 627